# EUROPÄISCHE PATENTANMELDUNG

(11) **EP 4 012 175 A1**
(43) Veröffentlichungstag der Anmeldung: **15.06.2022**
(21) Anmeldenummer: 20212977.1
(22) Anmeldetag: 10.12.2020
(51) Int. Cl.: F03D 80/00, F03D 17/00

(54) **VERFAHREN UND VORRICHTUNG ZUR VERMEIDUNG VON KOLLISIONEN ZWISCHEN MINDESTENS EINEM FLIEGENDEN VOGEL UND EINER WINDTURBINE**

(71) Anmelder: Ibeo Automotive Systems GmbH, 22143 Hamburg (DE)
(72) Erfinder: MELI TIWA, William Herman, 22143 Hamburg (DE)
(74) Vertreter: RGTH

(57) **Zusammenfassung**

Es wird ein Verfahren (100) zur Vermeidung von Kollisionen zwischen mindestens einem fliegenden Vogel (90) und einer Windturbine (50) vorgeschlagen, das ein Erkennen (101) und ein Klassifizieren (102) des mindestens einen Vogels (90) mittels Sensordaten (70) mindestens eines an einer Windturbine (50) angeordneten Sensors (11) umfasst.

## Beschreibung

Die vorliegende Erfindung betrifft ein Verfahren und eine Vorrichtung zur Vermeidung von Kollisionen zwischen mindestens einem fliegenden Vogel und einer Windturbine.

### Stand der Technik

Die Planung, die Errichtung und der Betrieb von Windturbinen beziehungsweise Windturbinenparks erfordert die Einhaltung lokaler Naturschutzgegebenheiten, wobei der Schutz seltener Tiere eine große Rolle spielt. Ein Großteil der geschützten Tierarten entfällt auf Vögel. Dabei ist der Artenschutz bei Vögeln in der gesamten Lebensdauer der Windturbinenprojekte zu berücksichtigen. Im Stand der Technik ist es bekannt, zur Bewertung der Einhaltung des Tierschutzes Gutachten zu erstellen, die jedoch sehr kostspielig sind und oft nicht der aktuellen Lage entsprechen, sodass im Zweifelsfall das Windparkprojekt nicht genehmigt wird. Außerdem erschweren beziehungsweise verhindern jahrelange alte Gutachten teilweise unbegründet ein Repowering von Windparks, in anderen Worten die Aktualisierung "alter" durch "neue" Turbinen. Insgesamt wird somit die Realisierung von Windparkprojekten erschwert und darüber hinaus eine deutlich geringere Einbindung der Windenergie in die elektrischen Versorgungsnetze erreicht.

### Darstellung der Erfindung: Aufgabe, Lösung, Vorteile

Es ist somit die Aufgabe der vorliegenden Erfindung, ein Verfahren und eine Vorrichtung zur Vermeidung von Kollisionen zwischen mindestens einem fliegenden Vogel und einer Windturbine derart zu verbessern, dass eine tatsächlich potentielle Kollision aufgrund von aktuellen Sensordaten vermieden werden kann.

Gelöst wird die vorgenannte Aufgabe durch ein Verfahren zur Vermeidung von Kollisionen zwischen mindestens einem fliegenden Vogel und einer Windturbine, das ein Erkennen und ein Klassifizieren des mindestens einen Vogels umfasst, und zwar auf Basis von Sensordaten mindestens eines an einer Windturbine angeordneten Sensors. Dabei kann es sich bei der Windturbine um die gleiche Windturbine handeln, hinsichtlich derer eine Kollision vermieden werden soll. Ferner kann es sich bei der Windturbine, an der der Sensor angeordnet ist, um eine andere Windturbine handeln, die Teil eines gemeinsamen Windparks ist. In einem solchen Fall bezieht sich das Verfahren zur Vermeidung von Kollisionen auf einen gesamten Windpark umfassend mehrere Windturbinen, wobei mindestens eine Windturbine einen Sensor umfasst, anhand dessen Sensordaten eine Kollision zwischen dieser Windturbine oder einer oder mehrerer anderer Windturbinen mit einem Vogel vermieden werden soll. Insbesondere könnten alle außen angeordneten Windturbinen eines Windparks einen entsprechenden Sensor umfassen. Ferner können alle Windturbinen eines Windparks einen Sensor aufweisen.

Insbesondere werden Vögel erkannt, die sich in einer Umgebung der Windturbine, an der der Sensor angeordnet ist, befinden. Dies betrifft insbesondere mindestens 300 m, ferner bevorzugt mindestens 500 m, am meisten bevorzugt mindestens 800 m, zur Windturbine. Insbesondere ist eine Vielzahl von Sensoren an der Windturbine angeordnet, am meisten derart, dass eine 360°-Überwachung der Umgebung der Windturbine erfolgt. Am meisten bevorzugt ist das Sichtfeld mindestens eines Sensors in eine Vorwärtsrichtung, das Sichtfeld mindestens eines Sensors in eine Rückwärtsrichtung, das Sichtfeld mindestens eines Sensors in eine erste Seitwärtsrichtung und das Sichtfeld mindestens eines Sensors in eine entgegengesetzte zweite Seitwärtsrichtung gerichtet. Unter dem Begriff "Vorwärtsrichtung" ist eine Richtung ausgehend von einem ersten Ende der Gondel der Wundturbine zu einem zweiten Ende, an dem die Nabe angeordnet ist, zu verstehen. In anderen Worten erstreckt sich die Vorwärtsrichtung stets hin zu den Rotorblättern, während die Rückwärtsrichtung entgegensetzt ist.

Unter dem Begriff "Erkennen und Klassifizieren" des mindestens einen fliegenden Vogels ist insbesondere zu verstehen, dass das Verfahren eine Bestimmung einer Anzahl des mindestens einen Vogels oder mehrerer Vögel umfasst und/oder eine Zuordnung einer Vogelart zu dem mindestens einen Vogel. Insbesondere wird jedem erkannten Vogel eine Vogelart zugeordnet. Dadurch, dass das Erkennen und das Klassifizieren des Vogels anhand aktueller Messdaten erfolgt, können abhängig von der Anzahl und/oder von der Art des Vogels eine Maßnahme, um eine Kollision zu vermeiden, ergriffen werden. Es kann somit eine Maßnahme gewählt werden, die auf die aktuelle Situation zutreffend ist. Dies ist basierend auf Gutachten, die aus dem Stand der Technik bekannt sind und zur Genehmigung einer Windturbine oder eines Windparks eingesetzt werden, nicht möglich. Auch kann der Nachteil des Stands der Technik überwunden werden, dass Gutachten stets nur eine "Momentaufnahme" abbilden, jedoch für eine lange Zeit gelten. So kann passieren, dass das Gutachten davon ausgeht, dass eine besonders geschützte Vogelart nicht betroffen ist, da diese im Zeitraum der Aufnahme des Gutachtens nicht beobachtet wurde, dies aber nicht der tatsächlichen Realität entspricht. Ferner können auf Basis des vorliegenden Verfahrens besonders seltene und schützenswerte Vogelarten geschützt werden.

Es kann sich somit auf Basis der Erfindung die Erschließung unter Artenschutz stehender Ausbauflächen für Windturbinen und Windturbinenparks wesentlich einfacher gestalten. Dadurch, dass aktiv Vögel erkannt und klassifiziert werden und artengerecht geschützt werden, kann auf aufwendige Gutachten verzichtet werden, die aufgrund der nahezu 100%igen manuellen Durchführung sowohl langsamer als auch fehleranfällig sind. Somit kann ein neutrales Verhalten im Tierschutzsinne hinsichtlich betriebener Windturbinen beziehungsweise Windturbinenparks erreicht werden.

Insbesondere umfasst die Windturbine mindestens einen ersten Sensor, der außen an der Windturbine angeordnet ist, und zwar derart, dass er mit den Rotorblättern der Windturbine mit rotiert. Der mindestens eine Sensor kann an einer Nabe der Windturbine angeordnet sein, insbesondere zwischen den Rotorblättern der Windturbine, am meisten bevorzugt mittig zwischen den Rotorblättern. Der mindestens eine erste Sensor kann im Wurzelbereich eines Rotorblattes angeordnet sein. Das Sichtfeld des mindestens einen ersten Sensors erstreckt sich insbesondere in die Vorwärtsrichtung der Windturbine. Insbesondere kann jeweils zwischen zwei Rotorblättern ein erster Sensor angeordnet sein.

Ferner kann die Windturbine mindestens einen zweiten Sensor umfassen, der ebenfalls außen an der Windturbine angeordnet ist, allerdings derart, dass dieser nicht mit den Rotorblättern mit rotiert. Es handelt sich somit um einen sogenannten turmfesten Sensor. Dieser ist insbesondere an der Gondel und/oder am Turm angeordnet. Insbesondere kann mindestens ein zweiter Sensor auf der Unterseite der Gondel angeordnet sein. Vorzugsweise befinden sich auf der Unterseite der Gondel zwei zweite Sensoren, insbesondere auf zwei gegenüberliegenden Seiten des Turmes, wobei deren Sichtfelder vorteilhafterweise in unterschiedliche Richtungen zeigen. Beispielsweisekann ein Sensor in die Vorwärtsrichtung gerichtet sein, während der andere in die Rückwärtsrichtung gerichtet ist. Ferner kann sich mindestens ein, insbesondere genau ein, zweiter Sensor auf einer Rückseite der Gondel befinden, dessen Sichtfeld in die Rückwärtsrichtung oder eine Seitwärtsrichtung der Windturbine zeigt. Zudem kann sich mindestens ein, insbesondere genau ein, zweiter Sensor auf der Oberseite der Gondel befinden. Am meisten bevorzugt ist das Sichtfeld mindestens eines zweiten Sensors in die Vorwärtsrichtung, das Sichtfeld mindestens eines zweiten Sensors in die Rückwärtsrichtung, das Sichtfeld mindestens eines zweiten Sensors in die erste Seitwärtsrichtung und das Sichtfeld mindestens eines zweiten Sensors in die zweite Seitwärtsrichtung gerichtet.

Turmfeste Sensoren, d.h. zweite Sensoren, haben den Vorteil, dass deren Sensordaten keiner Drehung unterliegen und somit Vögel leichter erkannt werden können, während rotierende erste Sensoren den Vorteil haben, dass dessen Sichtfeld nicht von einem rotierenden Rotorblatt durchkreuzt und somit gestört werden kann. Aus diesem Grund ist die Kombination beider Sensoren insgesamt sehr wertvoll.

Es kann sich bei dem mindestens einen Sensor um einen Solid State Lidar-Sensor oder ein Mikrofon handeln.

Insbesondere können sämtlich zuvor beschriebene Sensoren als Solid State Lidar-Sensor ausgebildet sein. Ferner kann es sich bei sämtlich zuvor beschriebenen Sensoren um ein Mikrofon handeln, insbesondere ein Mikrofon-Array. Unter einem Mikrofon-Array ist insbesondere zu verstehen, dass an der gleichen Position mehrere Mikrofone angeordnet sind, die allerdings in unterschiedliche Richtungen zur Erfassung von Tönen zeigen. So kann ein Array beispielsweise mindestens drei, vorzugsweise genau drei, Mikrofone umfassen, deren Erfassungsrichtung jeweils 90° versetzt ist. Somit kann mittels eines Mikrofon-Arrays bereits ein Großteil von 360° erfasst werden. Insbesondere kann an jeder Position, die zuvor beschrieben wurde, ein Mikrofon-Array und/oder ein Solid State Lidar-Sensor angeordnet sein. Im Folgenden wird der Einfachheit halber ein Solid State Lidar-Sensor als Lidar-Sensor bezeichnet.

Vorteilhafterweise werden mindestens ein Lidar-Sensor und mindestens ein Mikrofon, vor allem ein Mikrofon-Array, eingesetzt. Dabei kann an jeder oben genannten Stelle ein Lidar-Sensor und/oder ein Mikrofon angeordnet sein. Beispielsweise kann der mindestens eine erste Sensor und der mindestens eine zweite Sensor als Lidar-Sensor ausgebildet sein, wobei ferner mindestens ein Mikrofon-Array an der Gondel und/oder am Turm angeordnet ist.

Der Lidar-Sensor umfasst eine Sendeeinheit und eine Empfangseinheit. Das Verfahren umfasst insbesondere das Durchführen von Lichtlaufzeitmessungen mittels des Sensors um die Lidardaten zu erfassen. Bei den Lidardaten handelt es sich vor allem um eine Punktwolke. Lichtlaufzeitmessungen basieren auf dem Time-of-Flight-Prinzip. Es sendet somit mindestens ein Sendeelement, vorzugsweise mehrere Sendeelemente, der Sendeeinheit, vorzugsweise eines Lasers, mindestens einen Messpuls aus, der von einem zugeordneten Empfangselement der Empfangseinheit empfangen wird. Basierend auf der Lichtgeschwindigkeit kann die Distanz zwischen dem Sensor und dem Objekt, an dem der Puls reflektiert wurde, bestimmt werden. Jede Reflektion stellt einen Punkt in der Punktwolke dar. Bei den Empfangselementen handelt es sich insbesondere um Avalanche-Photodetektoren, beispielsweise um Single-Photon-Avalanche-Dioden, SPAD.

Solid state Lidar-Sensoren haben nicht nur den Vorteil der Antriebsfreiheit, die diese attraktiv zur Erkennung wendigen Vogelarten trotz ständig drehender Windturbinenräder macht, sondern sind insbesondere für den Einsatz an Windturbinen optimal. Dies liegt daran, dass eine Windturbine viele drehende Bauteile aufweist und es daher aufgrund der gyroskopischen Effekte besonders vorteilhaft ist, wenn ein Lidar-Sensor eingesetzt wird, der keine bewegenden Bauteile, wie Scanspiegel, aufweist.

Insbesondere ist ein Mikrofon derart angeordnet, dass mindestens ein Mikrofon in die Vorwärtsrichtung und mindestens ein Mikrofon in die Rückwärtsrichtung der Windturbine gerichtet sind.

Lidar-Sensoren haben insbesondere im Vergleich zu gewöhnlichen Kameras, die auf das Umgebungslicht angewiesen werden, um ein Bild zu erzeugen, erhebliche Vorteile. Die starke Korrelation zwischen dem Tageszeitpunkt und der Bildqualität von Kameras ist bei der Lidar-Technologie nicht vorhanden, da ein Lidar-Sensor tagsüber und nachts hervorragende Ergebnisse liefern kann, ohne durch Störung wie Schatten oder Sonnenlicht Leistungsverluste aufzuweisen. Auch gegenüber Infrarot-Kameras, die zwar den Vorteil haben, dass Nachtaufnahmen möglich sind, bestehen Vorteile, da diese ein sehr ungünstiges Preis-Leistungsverhältnis aufweisen. Darüber hinaus haben Kamerasysteme nicht hinnehmbare Schwächen in der Erfassung dreidimensionaler Ziele, insbesondere wenn sich die Ziele sehr weit entfernt befinden. Ein Lidar-Sensor eignet sich somit hervorragend, das Ziel der rechtzeitigen Erkennung teils schnellwendiger und schnellfliegender Vogelarten (beispielsweise bis zu 240 km/h bei einem Wanderfalken) zu erreichen, um eine entsprechende schnelle Reaktion, um eine Kollision zu vermeiden, vornehmen zu können. Die Kollision soll insbesondere zwischen den rotierenden Rotorblättern und dem Vogel vermieden werden. Vorteilhafterweise können Kameras hilfsweise eingesetzt werden. Vorzugsweise werden beim vorliegenden Verfahren keine Kameras, auch keine Infrarot-Kameras, verwendet.

Insbesondere erfasst das Verfahren ein Ermitteln einer Form des mindestens einen fliegenden Vogels, wobei die ermittelte Form mit zuvor abgespeicherten Formen verglichen wird und mindestens eine abgespeicherte Form der ermittelten Form zugeordnet wird. Dies wird insbesondere für jeden erkannten Vogel durchgeführt, und zwar auf Basis der Sensordaten. Ferner kann der ermittelten Form nicht nur eine einzige zuvor abgespeicherte Form zugewiesen werden, sondern auch eine zuvor definierte Anzahl von Formen zugeordnet werden. Die eine oder die mehreren Formen können mit entsprechenden Wahrscheinlichkeitsangaben bewertet sein. Die Wahrscheinlichkeitsangabe gibt an, wie wahrscheinlich die entsprechende abgespeicherte Form zutrifft, in anderen Worten wie ähnlich sich die ermittelte Form und die abgespeicherte Form sind. Es könnte somit angegeben sein, dass die ermittelte Form am wahrscheinlichsten einer ersten Form entspricht, vorzugsweise am zweitwahrscheinlichsten einer zweiten Form und weiter bevorzugt am drittwahrscheinlichsten einer dritten Form. Unter dem Begriff "Form" ist insbesondere eine dreidimensionale Form des Vogels zu verstehen.

Ferner bevorzugt umfasst das Verfahren ein Ermitteln eines Bewegungsprofils des mindestens einen Vogels, wobei das ermittelte Bewegungsprofil mit zuvor abgespeicherten Bewegungsprofilen verglichen wird und wobei das Verfahren eine Zuordnung zu mindestens einem abgespeicherten Bewegungsprofil umfasst. Wiederum kann das Verfahren die Zuordnung zu einer oder mehreren abgespeicherten Bewegungsprofilen umfassen, vorzugsweise in Kombination mit einer jeweiligen Wahrscheinlichkeitsangabe, die angibt, wie wahrscheinlich das Profil zutrifft. Dabei können insbesondere eine zuvor definierte Anzahl von Bewegungsprofilen zugeordnet werden, auf die das ermittelte Bewegungsprofil am besten zutrifft. Ein Bewegungsprofil kann insbesondere die Position und/oder die Geschwindigkeit und/oder die Beschleunigung umfassen. Ferner kann das Bewegungsprofil weitere Eigenschaften umfassen, beispielsweise die Wendigkeit und/oder bestimmte vogelartspezifische Flugmanöver.

Ferner bevorzugt umfasst das Verfahren das Ermitteln eines Tonabdrucks, in anderen Worten einer Tonaufnahme, wobei der ermittelte Tonabdruck mit zuvor abgespeicherten Tonabdrücken verglichen wird und wobei das Verfahren eine Zuordnung zu mindestens einem abgespeicherten Tonabdruck umfasst. Erneut kann das Verfahren die Zuordnung zu einem oder mehreren abgespeicherten Tonabdrücken umfassen, insbesondere mit einer entsprechenden Wahrscheinlichkeitsangabe, die angibt, wie wahrscheinlich der ermittelte Tonabdruck dem abgespeicherten Tonabdruck entspricht.

Insbesondere sind den zuvor abgespeicherten Formen und/oder Tonabdrücken und/oder Bewegungsprofilen jeweils mindestens eine, vorzugsweise genau eine, Vogelart zugeordnet.

Das Klassifizieren kann insbesondere anhand der mindestens einen zugeordneten Form und/oder des mindestens einen zugeordneten Bewegungsprofils und/oder des mindestens einen zugeordneten Tonabdrucks erfolgen. Dabei sind die Form, das Bewegungsprofil und der Tonabdruck jeweils charakteristisch für eine Vogelart. Auf Basis der zugeordneten Form, des Bewegungsprofils und/oder des Tonabdrucks kann somit auf die Vogelart geschlossen werden. Das Verfahren kann bei der Klassifizierung anhand der zugeordneten Form und/oder des Bewegungsprofils und/oder des Tonabdruckes eine Abwägung zwischen diesen zur Ermittlung der passendsten Vogelart umfassen. Dabei können insbesondere die Wahrscheinlichkeitsangaben der mindestens einen zugeordneten Form und/oder des mindestens einen zugeordneten Bewegungsprofils und/oder des mindestens einen zugeordneten Tonabdrucks berücksichtigt werden. Ferner kann eine Abwägung erfolgen, ob sich die zuvor genannten Kriterien widersprechen. So könnte beispielsweise das zugeordnete Bewegungsprofil der zugeordneten Form und des mindestens einen zugeordneten Tonabdrucks widersprechen, sodass das Bewegungsprofil in der Abwägung nachrangig Einfluss findet. Ferner kann das Kriterium weniger stark berücksichtigt werden, das die geringste Wahrscheinlichkeitsangabe aufweist.

Insbesondere werden die Sensordaten, vorzugsweise in der Form von Rohdaten, vorverarbeitet. Die vorverarbeiteten Daten können insbesondere eine Filterung umfassen. Ferner kann die Vorverarbeitung eine Kalibrierung der Sensoren umfassen. Zudem kann die Vorverarbeitung eine Transformation von Sensordaten in ein gemeinsames Koordinatensystem umfassen. Das Ziel der Koordinatentransformation ist, vor allem eine 360°-Abdeckung der Umgebung der Windturbine zu erreichen. Es können insbesondere bei den ersten Sensoren die Drehungen, die diesen unterworfen sind, herausgerechnet werden. Dabei findet die Vorverarbeitung insbesondere separat hinsichtlich der Sensordaten des mindestens einen Lidar-Sensors und der Sensordaten des mindestens einen Mikrofons statt.

Ferner können die Sensordaten von nicht relevanten Einflüssen bereinigt werden. Hinsichtlich der Sensordaten des mindestens einen Mikrofons können Anteile herausgerechnet werden, die mit der Windturbinendrehzahl korrelieren. Dabei handelt es sich insbesondere um das Grundsignal und die Harmonischen der Windturbinendrehzahl.

Das mindestens eine Mikrofon, das in die Vorwärtsrichtung ausgerichtet ist, und das mindestens eine in die Rückwärtsrichtung ausgerichtete Mikrofon der Windturbine erleben die Windturbinendrehzahl-korrelierenden Anteile unterschiedlich. Während das mindestens eine nach vorne gerichtete Mikrofon die Rotation der Rotorblätter sehr stark wahrnimmt, empfindet das nach hinten gerichtete Mikrofon diese als geringer. Es kann somit durch einen Vergleich der unterschiedlich ausgerichteten Mikrofone die Drehzahl bestimmt werden und dessen Grundsignal sowie die Harmonischen aus den Sensordaten bestimmt und entfernt werden. Insbesondere kann hierfür "adaptive filtering" oder in anderen Worten aktives "noise cancelling" eingesetzt werden.

Auch hinsichtlich der Sensordaten des mindestens einen Lidar-Sensors können turbineneigene Effekte herausgerechnet werden. Beispielsweise könnten bei dem mindestens einen zweiten Sensor, der turmfest angeordnet ist und dessen Erfassungsbereich nach vorne gerichtet ist, sich periodisch rotierende Elemente, wie bspw. Rotorblätter, aus den Sensordaten herausgerechnet werden. Die Sensordaten eines Lidar-Sensors sind insbesondere eine Punktwolke. In anderen Worten müssen aus der Punktwolke die Punkte, die auf der Reflektion an einem rotierenden Rotorblatt, insbesondere der betreffenden Windturbine oder einer anderen Windturbine, die sich im Sichtfeld des Lidar-Sensors befindet, beruhen, entfernt werden.

Ferner können Schwingungseffekte herausgerechnet werden. Beispielsweise ist der mindestens eine zweite Sensor stärker zum Turm gekoppelt und kann zur Eliminierung nicht erwünschter Turmeffekte, beispielsweise einer Verfälschung der Kalibrierung aufgrund nicht vernachlässigbarer Turmschwingungen, eingesetzt werden.

Insbesondere für die Vorverarbeitung der Sensordaten und/oder die Bereinigung der Sensordaten von nicht relevanten Einflüssen können Umwelteinflüsse und/oder Windturbinendaten berücksichtigt werden. Darunter fallen zum Beispiel die Geschwindigkeit des Rotors der Windkraftanlage, der Azimutwinkel der Gondel oder der Einfallswinkel des Sonnenlichtes. Auch aus diesen Daten kann somit die Rotordrehzahl zur Berücksichtigung herangezogen werden.

Ferner kann das Verfahren eine Verarbeitung der Sensordaten für den Vergleich mit den zuvor abgespeicherten Informationen, wie den Formen und/oder Bewegungsprofilen, umfassen.

Insbesondere werden im Rahmen der Verarbeitung der Sensordaten des mindestens einen Lidar-Sensors Muster erkannt, insbesondere Muster, die einer Vogelform entsprechen können. Auf diese Weise wird eine Form eines Vogels ermittelt. Zuvor kann die Verarbeitung zur Vorbereitung insbesondere eine Datenergänzung umfassen. Beispielsweise kann durch die zuvor durchgeführte Bereinigung von nicht relevanten Einflüssen ein Anteil, der auf der Reflektion an einem rotierenden Rotorblatt basiert, aus einer Punktwolke entfernt worden sein. Dies kann allerdings einen Anteil der Punktwolke negativ beeinflussen, der auf einer Reflektion an einem Vogel basiert. Dies passiert bspw. bei einer Überlappung eines erkannten Vogels und eines Rotorblattes. Beispielsweise kann durch das Entfernen des Anteils des Rotorblattes ein Teil des erkannten Vogels "herausgeschnitten" worden sein, sodass die Vogelform gestört ist. In einem solchen Fall können Punkte mittels einer entsprechenden Interpolationsfunktion zur Punktwolke ergänzt werden. Insbesondere kann eine Interpolationsfunktion in einem Bereich, in dem Punkte ergänzt werden sollen, gelegt werden und auf Basis deren Position Punkte hinzugefügt werden. Die Interpolationsfunktion wird insbesondere basierend auf den noch vorhandenen Punkten des Vogels in die erkannte Form hineingelegt.

Ferner kann die Verarbeitung eine Umskalierung umfassen, beispielsweise liegen die zuvor abgespeicherten Formen in einer bestimmten Größe vor. Der Vergleich wird wesentlich vereinfacht, wenn die ermittelte Form in die gleiche Größe wie die Vergleichsformen gebracht wird. Dies wird durch eine entsprechende Umskalierung erreicht. Ferner kann auch eine entsprechende Drehung der Form des Vogels entsprechend einer zuvor definierten Position der Vergleichsformen, durchgeführt werden.

Als nächster Schritt findet insbesondere ein Vergleich der ermittelten Form mit den zuvor abgespeicherten Formen statt. Dafür kann insbesondere ein zuvor trainiertes Modell eingesetzt werden. Bei dem Vergleich handelt es sich vor allem um ein sogenanntes Inferencing. Insbesondere kann ein trainiertes neuronales Netzwerk eingesetzt werden, das die ermittelte Form mit den zuvor abgespeicherten Formen vergleicht.

Auf Basis der erkannten Muster bzw. Formen in der Punktwolke, die einem Vogel zugeordnet werden könnten, kann ferner ein Bewegungsprofil ermittelt werden. Dafür wird das erkannte Muster oder in anderen Worten die ermittelte Form eines Vogels über einen definierten Zeitraum in den entsprechenden Punktwolken des mindestens einen Lidar-Sensors beobachtet. Somit können Informationen über dessen Position, Geschwindigkeit und/oder Beschleunigung ermittelt werden. Ferner können Informationen über die Wendigkeit und/oder bestimmte Flugkurvenverläufe ermittelt werden.

Ferner kann auf die gleiche Weise eine bisherige Trajektorie des Vogels noch vor dessen tatsächlicher Klassifikation, bestimmt werden. Die bisherige Trajektorie bezieht sich auf den Weg, den der Vogel bisher zurückgelegt hat. Ferner kann die zukünftige Trajektorie, insbesondere auf Basis der bisherigen Trajektorie, vorhergesagt werden. Bei der Vorhersage können insbesondere weitere zuvor abgespeicherte Eigenschaften berücksichtigt werden, die der Vogelart zugeordnet sind, wie bspw. oben beschrieben die Wendigkeit oder eine maximale Geschwindigkeit.

Es kann ein Vergleich mit den zuvor abgespeicherten Bewegungsprofilen erfolgen, um mindestens ein abgespeichertes Bewegungsprofil zuordnen zu können. Dabei wird zum Vergleich insbesondere ein zuvor trainiertes Modell eingesetzt, insbesondere ein zuvor trainiertes neuronales Netzwerk.

Die Ergebnisse der beiden Vergleiche können insbesondere zusammengeführt werden.

Auf Basis der zusammengeführten Ergebnisse, in anderen Worten der mindestens einen zugeordneten Form und/oder des mindestens einen zugeordneten Bewegungsprofils, kann auf Basis der Sensordaten des mindestens einen Lidar-Sensors unter Abwägung der passendsten Vogelart eine Zuordnung einer Vogelart zu jedem erkannten Vogel und eine Bestimmung der Anzahl der Vögel erreicht werden.

Ferner können Abweichungen zu den bereits abgespeicherten Informationen und zu den ermittelten Informationen ermittelt werden, die dafür genutzt werden können, die entsprechend benutzten Modelle zu aktualisieren. Dies kann insbesondere mittels einer Selbstlernfunktion der eingesetzten Modelle erfolgen. Die Aktualisierung erfolgt insbesondere auf Basis ermittelter Residuen des entsprechenden Vergleichs. Durch die Verwertung der Residuen und der Aktualisierung der Modelle lassen sich neue Erkenntnisse beziehungsweise vorher nicht bekannte Vogelarten in die Modelle aufnehmen. Dadurch ist eine zeitabhängige Evolution der wahrgenommenen Vogelarten beobachtbar, wobei diese Beobachtungen wiederum für andere Dienstleistungen, beispielsweise Gutachten, eingesetzt werden könnten.

Auch hinsichtlich der Sensordaten des mindestens einen Mikrofons kann ein entsprechender Vergleich mittels eines trainierten Modells, insbesondere eines zuvor trainierten neuronalen Netzwerkes, erfolgen. Dies erfolgt vor allem im Rahmen eines Inferencing. Dafür wird nach der Vorverarbeitung der Sensordaten insbesondere ein Spektrogramm erstellt. Unter einem Spektrogramm ist insbesondere die Darstellung des zeitlichen Verlaufs des Sequenzspektrums der Sensordaten, also der Tondaten, zu verstehen. Die Sensordaten werden nach den Frequenzen aufgeteilt und dann zeitlich beobachtet. Auf diese Weise wird der entsprechende Tonabdruck erzeugt und kann mit Hilfe des Vergleichs mit den zuvor abgespeicherten Tonabdrücken mindestens einem Tonabdruck, der zuvor abgespeichert ist, zugeordnet werden. Somit können erkannte Vögel klassifiziert und die Vogelanzahl bestimmt werden. Dabei kann erneut eine Abweichung ermittelt werden, um das entsprechende Modell zu aktualisieren.

Die eingesetzten neuronalen Netzwerke werden insbesondere anhand der entsprechenden zuvor abgespeicherten Informationen trainiert. So können Formen, Bewegungsprofile oder Tonabdrücke jeweils zuvor manuell kategorisiert worden sein und anhand der zuvor gelabelten Informationen wird das entsprechende Netzwerk trainiert.

Ferner kann aus dem erstellten Spektrogramm, insbesondere unter Berücksichtigung des Ergebnisses des Vergleichs, eine bisherige Trajektorie jedes Vogels ermittelt und/oder vorgesagt werden. Dabei kann die bekannte Position verschiedener Mikrofone berücksichtigt werden. Ferner kann eine zukünftige Trajektorie vorhergesagt werden.

Eine entsprechende bisherige und/oder zukünftige Trajektorie kann somit sowohl basierend auf den Sensordaten des Lidar-Sensors als auch auf den Sensordaten des Mikrofons ermittelt werden. Insbesondere umfasst das Verfahren somit das Ermitteln einer bisherigen und/oder zukünftigen Trajektorie des fliegenden Vogels auf Basis des Bewegungsprofils und/oder auf Basis des aus den Sensordaten des mindestens einen Mikrofons ergebenden Spektrogramms. Bei der Trajektorie handelt es sich jeweils um eine 3D Trajektorie.

Ferner können die Ergebnisse des Vergleichs basierend auf den Sensordaten des mindestens einen Lidar-Sensors und die Ergebnisse des Vergleichs basierend auf den Sensordaten des mindestens einen Mikrofons zusammengeführt werden. Es kann eine erneute Abwägung stattfinden und erst im Anschluss die Anzahl der Vögel und/oder die Vogelart bestimmt werden. Durch die Berücksichtigung von Sensordaten verschiedener Sensorarten ist das Verfahren besonders robust. Ferner wird die Erkennungsrate deutlich erhöht.

Das Verfahren kann insbesondere eine Ausführung einer Maßnahme zum Vermeiden einer Kollision umfassen, wobei die Maßnahme in Abhängigkeit der ermittelten Vogelart und/oder mit der Vogelart verbundenen zuvor abgespeicherten Eigenschaften und/oder der ermittelten Anzahl der Vögel und/oder der ermittelten bisherigen und/oder vorhergesagten zukünftigen Trajektorie gewählt wird. Die Maßnahme findet insbesondere auf Seite der Windturbinen statt und kann insbesondere ein Abbremsen des Rotors der Windturbine und/oder ein Umleiten des Vogels umfassen.

Mit den zuvor abgespeicherten Eigenschaften sind insbesondere die Wendigkeit oder bestimmte Flugmanöver zu verstehen, die dem Bewegungsprofil zuzuordnen sind. Diese Information kann in die vorhergesagte zukünftige Trajektorie mit einfließen. Ferner kann unter einer Eigenschaft abgespeichert sein, wie selten oder wie stark geschützt der Vogel ist. Insbesondere kann eine Maßnahme stärker ausfallen, wenn eine besonders seltene Vogelart erkannt wurde oder die Anzahl der Vögel besonders hoch ist. Ferner kann die Maßnahme stärker ausfallen, wenn ein Vogel erkannt wurde, der aufgrund seines Flugverhaltens unvorhersehbarer ist, beispielsweise aufgrund seines Geschwindigkeitsprofils, seiner Wendigkeit oder der Kurvenverläufe, die dieser Vogel fliegen kann. Eine starke Maßnahme kann insbesondere ein Abbremsen bis zum vollkommenen Stillstand des Rotors der Windturbine bedeuten, sprich eine maximale Abbremsung des Rotors in den Trudelbetrieb. Eine weniger starke Maßnahme kann ein Umleiten des Vogels umfassen. Ferner kann die Maßnahme in Abhängigkeit davon gewählt werden, ob die vorhergesagte zukünftige Trajektorie in einer Kollision resultieren würde.

Zum Umleiten des Vogels können insbesondere Lichtsignale und/oder Tonsignale emittiert werden, um den Vogel umzuleiten. In anderen Worten soll der Vogel die Windturbine derart umfliegen, dass keine Kollision stattfindet. Unter dem Begriff "Umleiten" ist insbesondere zu verstehen, dass der Vogels aus einer Gefahrenzone herausbegleitet wird oder derart umgelenkt wird, dass er diese gar nicht erst betritt. Es können insbesondere Lichtsignale im UV-Bereich emittiert werden, da diese menschenfreundlich sind, da sie für den Menschen nicht sichtbar sind, jedoch der Vogel diese wahrnehmen kann und somit die vorhergesagte zukünftige, potentiell kritische Trajektorie verlassen sollte.

Insbesondere kann zuvor eine Umwegtrajektorie, in anderen Worten ein unkritischer Umweg um die entsprechende Gefahrenzone, ermittelt werden und mittels des Emittierens von Lichtsignalen und/oder Tonsignalen erreicht werden, dass der Vogel dieser Umwegtrajektorie folgt. Dabei kann die Stärke der Lichtsignale und/oder Tonsignale davon abhängig sein, wie stark die Umwegtrajektorie von der vorhergesagten Trajektorie abweicht. Ob der Vogel der Umwegtrajektorie tatsächlich folgt und somit die Maßnahme erfolgreich ist, kann insbesondere mittels des mindestens einen Sensors beobachtet werden. So kann überprüft werden, ob die Maßnahme ausreicht, um ggfs. eine stärkere Maßnahme zu ergreifen.

Bei den Tonsignalen handelt es sich insbesondere um Nachahmungen eines Raubvogels. Auch eine Kombination mehrerer Töne aus verschiedenen Vogelarten aus der Räuberkategorie ist möglich. Dafür weist eine Windturbine insbesondere mindestens eine Emissionseinheit auf, um Tonsignale und/oder Lichtsignale zu emittieren. Vorzugsweise handelt es sich bei der Emissionseinheit um entsprechende Lautsprecher, um die Tonsignale auszusenden und/oder entsprechende Lichtquellen um die Lichtsignale auszusenden. Handelt es sich um einen Windpark, können insbesondere außen angeordnete Windturbinen entsprechende Lautsprecher und/oder Lichtquellen aufweisen.

Windturbinen eines Windparks können bei der Durchführung einer Maßnahme zusammenarbeiten. So können unterschiedliche Windturbinen unterschiedlichen Abschnitten einer zuvor ermittelten Umwegtrajektorie zugeordnet sein und somit dafür zuständig sein, zu überprüfen, ob der Vogel der Umwegtrajektorie folgt und/oder um Lichtsignale und/oder Tonsignale im entsprechenden Abschnitt entsprechend der Umwegtrajektorie zu emittieren.

Durch die Möglichkeit des Umleitens des Vogels ergeben sich weitere wichtige Vorteile. Beispielsweise können Bauflächen neu erschlossen werden. Ferner können alte Windparks eines Repowerings unterzogen werden und es kann eine Optimierung der Turbinenleistung im Betrieb stattfinden, da wenig bis keine Abschaltung mehr nötig ist. Es wird somit die Akquise neuer Ausbauflächen ermöglicht, da bisher aus dem Artenschutz heraus nicht freigegebene Ausbauflächen als neue Windturbinenstandorte markiert werden könnten, zumal die Windturbine beziehungsweise der Windturbinenpark der Artenschutz aktiv implementiert ist. Bei älteren Windenergieanlagen besteht bei einer Retrofit-Anwendung die Möglichkeit, die Windturbinen weniger leistungstechnisch zu drosseln, beispielsweise wegen eines Vogelschwarms, und letztendlich über mehr Ertrag die Profitabilität der Windturbinenprojekte zu erhöhen.

In einem weiteren Aspekt betrifft die Erfindung eine Vorrichtung zur Vermeidung einer Kollision zwischen einer Windturbine und einem fliegenden Vogel, wobei die Vorrichtung mindestens einen oben beschriebenen Sensor aufweist, um die entsprechenden Sensordaten zu ermitteln. Insbesondere weist die Vorrichtung ferner eine Auswerteeinheit auf, die zum Erkennen und zum Klassifizieren des mindestens einen Vogels ausgebildet ist. Insbesondere ist die Vorrichtung zur Durchführung des oben genannten Verfahrens ausgebildet.

Dabei kann die Auswerteeinheit insbesondere die Sensordaten vorverarbeiten und/oder bereinigen und/oder verarbeiten und/oder einen Vergleich durchführen, um eine Form und/oder ein Bewegungsprofil und/oder einen Tonabdruck zu ermitteln. Ferner kann sie diese mit entsprechend abgespeicherten Informationen vergleichen und vorzugsweise jeweils eine zuvor abgespeicherte Form und/oder ein zuvor abgespeichertes Bewegungsprofil und/oder einen zuvor abgesicherten Tonabdruck zuzuordnen. Ferner ist die Auswerteeinheit dazu ausgebildet, die Ergebnisse zusammenzuführen und unter einer entsprechenden Abwägung einer Vogelart zuzuordnen und die Anzahl der Vögel zu bestimmen. Dafür kann die Auswerteeinheit eine Fusionseinheit zum Zusammenführen der Ergebnisse aufweisen. Auch das Bestimmen der bisherigen Trajektorie und/oder das Vorhersagen einer zukünftigen Trajektorie werden mittels der Auswerteeinheit durchgeführt. Die Auswerteeinheit umfasst ferner die entsprechenden Modelle, die zu dem Vergleich herangezogen werden. Ferner kann die Auswerteeinheit dazu ausgebildet sein, ein Steuersignal zum Einleiten einer Maßnahme, um eine Kollision zu vermeiden, an eine Pitchverstelleinheit weiterzugeben, die dazu ausgebildet ist, kollektiv und/oder einzeln den Pitch der Rotorblätter derart zu verändern, dass ein Abbremsen auf möglichst schnelle Art und Weise möglich ist. Ferner kann ein entsprechendes Steuersignal mindestens eine Emissionseinheit zum Ermitteln von Licht- und/oder Tonsignalen umfassen. Insbesondere umfasst die Vorrichtung die entsprechende Pitchverstelleinheit und/oder die mindestens eine Emissionseinheit. Insbesondere umfasst die Auswerteeinheit einen Prozessor, vorzugsweise eine Recheneinheit wie bspw. eine zentrale Verarbeitungseinheit (CPU = Central Processing Unit), die dazu ausgebildet ist, die oben beschriebenen Schritte des Verfahrens durchzuführen. Ferner kann die Auswerteeinheit einen Speicher und eine Eingabe-/ Ausgabe-Schnittstelle umfassen.

In einem weiteren Aspekt bezieht sich die vorliegende Erfindung auf eine Windturbine umfassend eine erfindungsgemäße Vorrichtung. Die Windturbine hat vor allem eine Leistung von mindestens 1 MW.

Ferner umfasst die Erfindung ein Computerprogrammprodukt, das ein computerlesbares Speichermedium umfasst, auf dem ein Programm gespeichert ist, dass es einem Computer ermöglicht, nachdem es in den Speicher des Computers geladen worden ist, ein oben beschriebenes Verfahren, gegebenenfalls in Zusammenspiel mit einer oben beschriebenen Vorrichtung, durchzuführen.

Zudem betrifft die Erfindung ein computerlesbares Speichermedium, auf dem ein Programm gespeichert ist, das es einem Computer ermöglicht, nachdem es in den Speicher des Computers geladen worden ist, ein oben beschriebenes Verfahren, gegebenenfalls in Zusammenspiel mit einer oben beschriebenen Vorrichtung, durchzuführen.

### Kurze Beschreibung der Figuren

Es zeigen in rein schematischer Darstellung:
- Figur 1:: eine perspektivische Ansicht einer Windturbine umfassend eine erfindungsgemäße Vorrichtung;
- Figur 2:: eine perspektivische Ansicht einer weiteren Windturbine umfassend eine erfindungsgemäße Vorrichtung;
- Figur 3:: eine seitliche Ansicht eines Mikrofon-Arrays;
- Figur 4:: eine weitere perspektivische Ansicht einer weiteren Windturbine umfassend eine erfindungsgemäße Vorrichtung;
- Figur 5:: eine Frontansicht eines oberen Abschnitts einer weiteren Windturbine umfassend eine erfindungsgemäße Vorrichtung;
- Figur 6:: eine Seitenansicht des oberen Abschnitts der Windturbine umfassend die erfindungsgemäße Vorrichtung der Figur 5;
- Figur 7:: ein Flussdiagramm eines erfindungsgemäßen Verfahrens;
- Figur 8:: ein Flussdiagramm eines weiteren erfindungsgemäßen Verfahrens;
- Figur 9:: eine erfindungsgemäße Vorrichtung; und
- Figur 10:: eine Umwegtrajektorie im Rahmen einer Maßnahme zum Umleiten eines Vogels.

### Bevorzugte Ausführungsformen der Erfindung

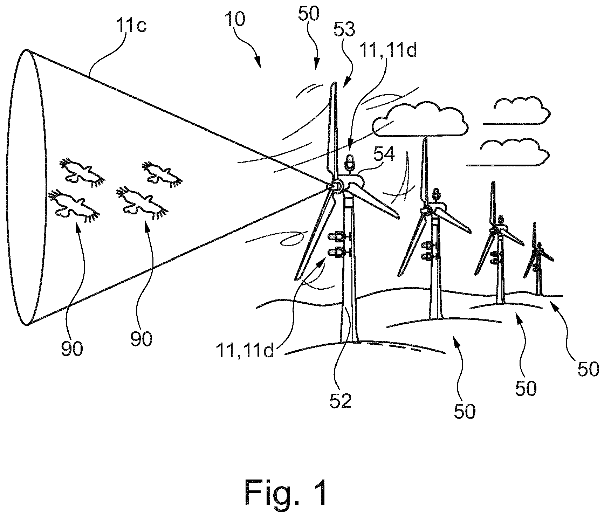

Figur 1 zeigt eine perspektivische Ansicht einer Windturbine umfassend eine erfindungsgemäße Vorrichtung 10 zum Vermeiden von Kollisionen zwischen mindestens einem fliegenden Vogel 90 und der Windturbine 50. Die Vorrichtung 10 umfasst mehrere Sensoren 11, die als Lidar-Sensoren 11d ausgebildet sind. In Figur 1 sind die Sensoren 11 am Turm 52 und an der Gondel 54 der Windturbine 50 angeordnet. Ferner ist in Figur 1 der Erfassungsbereich 11c der Lidar-Sensoren 11d exemplarisch dargestellt. Die Auswerteeinheit 55 der erfindungsgemäßen Vorrichtung 10 ist in Figur 1 nicht zu sehen.

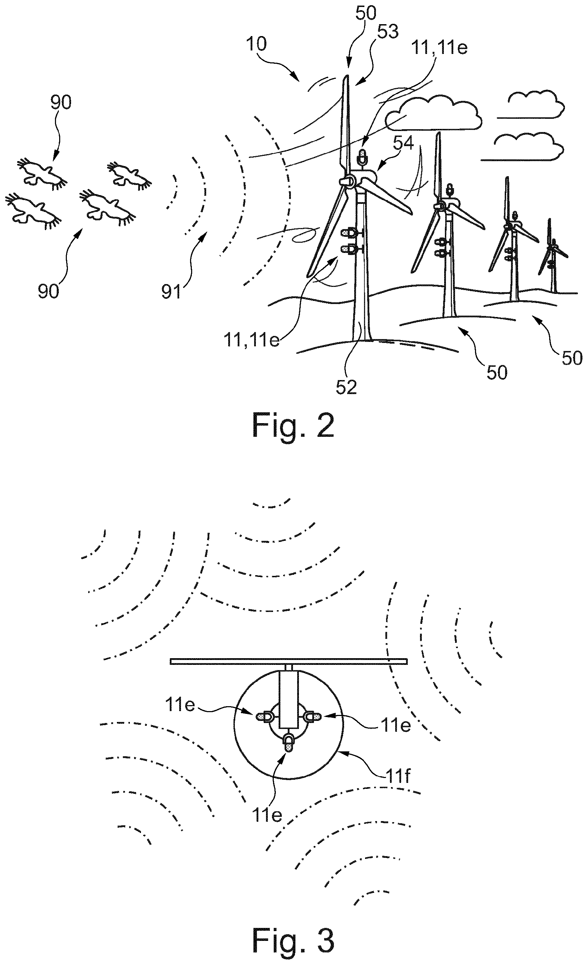

Figur 2 stellt eine perspektivische Ansicht einer Windturbine 50 dar, die eine erfindungsgemäße Vorrichtung 10 umfasst. Die erfindungsgemäße Vorrichtung 10 umfasst mehrere Sensoren 11, die analog zur Figur 1 angeordnet sind, die in diesem Fall allerdings als Mikrofone 11e, insbesondere als Mikrofon-Arrays 11f, ausgebildet sind. Beispielhaft ist dargestellt, wie sich Geräusche 91 von den Vögeln 90 in Richtung der Mikrofone 11e ausbreiten.
Figur 3 zeigt eine seitliche Ansicht eines Mikrofon-Arrays 11e, der drei Mikrofone 11e umfasst, die in unterschiedliche Richtungen weisen, sodass Geräusche aus einem möglichst großen Erfassungsbereich aufgenommen werden können.

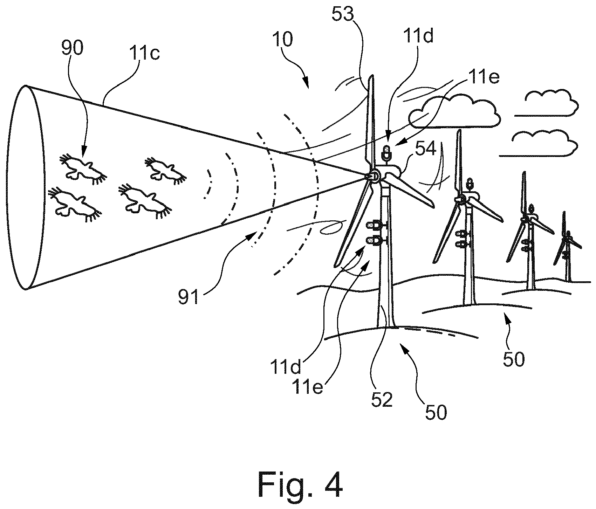

Figur 4 zeigt eine weitere perspektivische Ansicht einer Windturbine 50 umfassend eine erfindungsgemäße Vorrichtung 10, bei der die Sensoren 11 sowohl Lidar-Sensoren 11d als auch Mikrofone 11e umfassen. Dadurch werden die Vögel 90 in dem Erfassungsbereich 11c der Lidar-Sensoren 11d von vorne wahrgenommen als auch mittels deren Geräusche 91 von den Mikrofonen 11e.

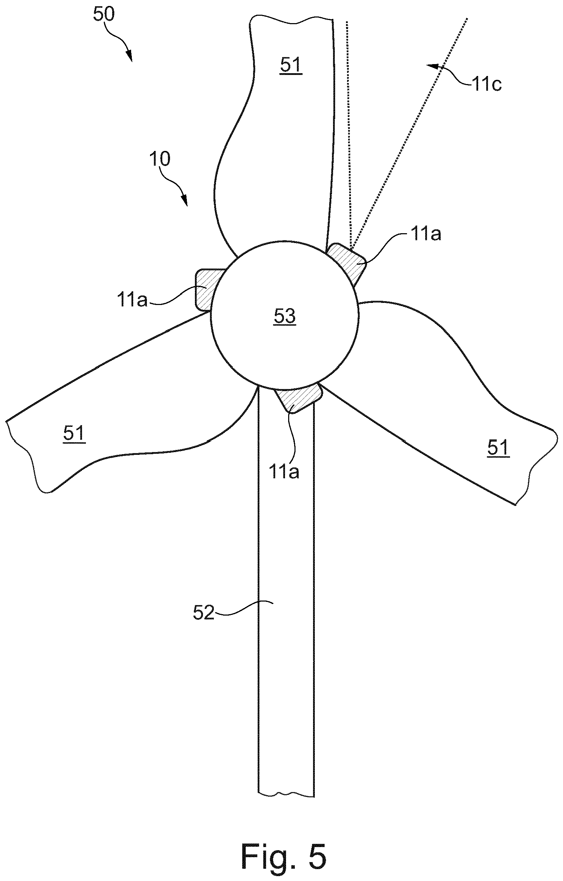

Figur 5 zeigt eine Frontansicht eines oberen Abschnitts einer Windturbine 50 mit einer erfindungsgemäßen Vorrichtung 10. Die Windturbine 50 umfasst drei Rotorblätter 51, die in Figur 5 nicht in voller Länge dargestellt sind. Die Vorrichtung 10 umfasst erste Sensoren 11a, die derart angeordnet sind, dass sie mit den Rotorblättern 51 mitrotieren. Die ersten Sensoren 11a sind insbesondere zwischen den Rotorblättern 51 der Windturbine 50 angeordnet, und zwar außen auf einer Nabe 53 der Windturbine 50. Bei einem der ersten Sensoren 11a ist exemplarisch der entsprechende Erfassungsbereich 11c in Figur 2 zu sehen. Bei den ersten Sensoren 11a kann es sich um Lidar-Sensoren 11d und/oder um Mikrofone 11e handeln.

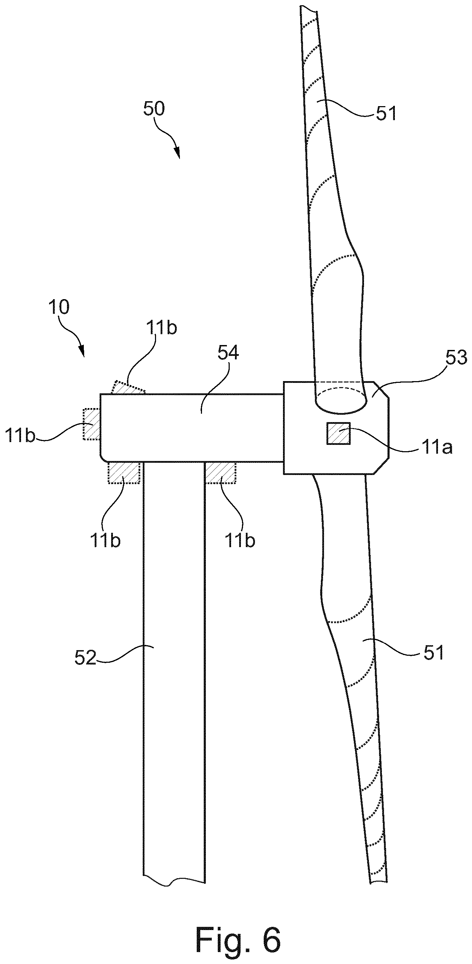

Figur 6 zeigt eine Seitenansicht des oberen Abschnitts der Windturbine 50 mit der erfindungsgemäßen Vorrichtung 10 der Figur 5. Die Vorrichtung 10 umfasst ebenfalls zweite Sensoren 11b, die derart angeordnet sind, dass sie nicht mit den Rotorblättern 51 mitrotieren. Die zweiten Sensoren 11b sind an der Gondel 54 angeordnet. Dabei ist ein zweiter Sensor 11b auf der Oberseite 54a der Gondel 54, einer auf der Rückseite 54c der Gondel 54 und zwei auf der Unterseite 54b der Gondel 54, und zwar auf jeweils unterschiedlichen Seiten des Turmes 52, angeordnet. Dabei kann der Erfassungsbereich des zweiten Sensors 11b auf der Rückseite der Gondel 54 insbesondere nach hinten gerichtet sein, um Vögel zu erkennen, die von hinten auf die Windturbine 50 zukommen. Gleiches kann für den zweiten Sensor 11b gelten, der auf der Unterseite der Gondel 54 angeordnet ist und zwar im hinteren Bereich. Der zweite Sensor 11b, der auch auf der Unterseite der Gondel 54 angeordnet ist, kann hingegen nach vorne gerichtet sein. Bei den zweiten Sensoren 11b kann es sich um Lidar-Sensoren 11d und/oder um Mikrofone 11e handeln.

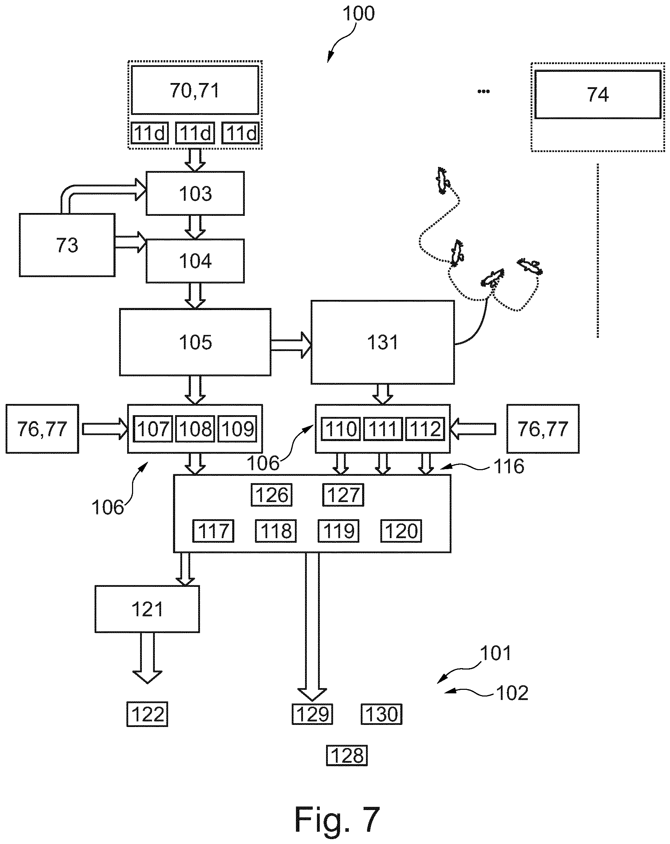

Figur 7 zeigt ein Flussdiagramm eines erfindungsgemäßen Verfahrens 100. Es werden Sensordaten 70 als Rohdaten, nämlich Lidardaten 71 von unterschiedlichen Lidar-Sensoren 11d vorverarbeitet 103. Im Rahmen der Vorverarbeitung 103 können Umwelteinflüsse und/oder Windturbinendaten 73 berücksichtigt werden. Nach der Vorverarbeitung 103 werden die Sensordaten 70 von nicht relevanten Einflüssen bereinigt 104. Auch hier können Umwelteinflüsse und/oder Windturbinendaten 73 einfließen.

Als nächstes findet eine Verarbeitung 105 der Sensordaten 70 statt. Die Vorverarbeitung 105 dient insbesondere einem Inferencing 106. Im Rahmen des Inferencing 106 werden insbesondere in den Lidardaten 71 wenigstens das Muster eines Vogels erkannt und somit dessen Form ermittelt 107 und mit zuvor abgespeicherten Formen verglichen 108. Ferner wird der ermittelten Form mindestens eine abgespeicherte Form zugeordnet 109. Diese Schritte werden insbesondere mittels Inferencing durchgeführt, und zwar mit Hilfe eines Modells 76, und zwar eines trainierten neuronalen Netzwerkes 77. Das Ergebnis wird weitergegeben.

Ferner können aus den Lidardaten 71 kinematische Informationen abgeleitet werden 131. Insbesondere kann mindestens ein Bewegungsprofil des mindestens einen fliegenden Vogels ermittelt 110 und mit zuvor abgespeicherten Bewegungsprofilen verglichen werden 111, wobei als Ergebnis mindestens ein abgespeichertes Bewegungsprofil dem ermittelten Bewegungsprofil zugeordnet wird 112. Dies wird insbesondere mit Hilfe eines Modells 76, insbesondere eines zuvor trainierten neuronalen Netzwerkes 77, durchgeführt, und zwar mittels Inferencing.

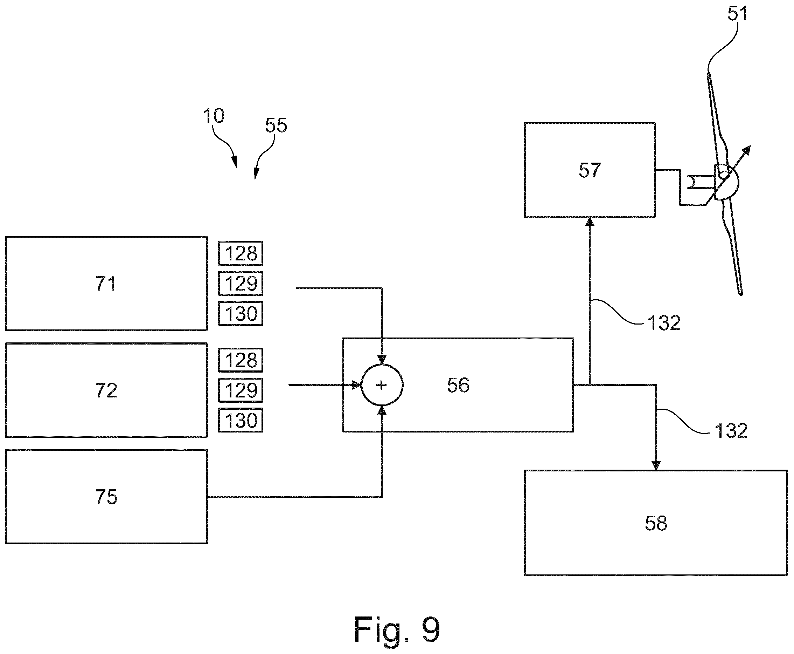

Die Ergebnisse werden zusammengeführt 116, wobei eine Abwägung 118 zum Ermitteln der passendsten Vogelart und eine Zuordnung 119 der Vogelart 130 zu jedem erkannten Vogel erfolgt. Dies kann eine Klassifikation 117 anhand der mindestens einen zugeordneten Form und/oder des mindestens einem zugeordneten Bewegungsprofil und/oder des mindestens einem zugeordneten Tonabdruck umfassen. Ferner kann die Anzahl 129 der Vögel bestimmt werden 120. Auf diese Weise wird mindestens ein fliegender Vogel erkannt 101 und klassifiziert 102. Es kann eine bisherige Trajektorie 128 ermittelt werden 126 und auch vorhergesagt werden kann 127. Ferner können Abweichungen bestimmt werden 121, um die benutzten Modelle zu aktualisieren 122. Analoge Schritte können für zusätzliche Messdaten 74 durchgeführt werden. Die Messdaten können bspw. von Kameras stammen, die auch in einer Fusionseinheit 56 (Figur 9) berücksichtigt werden können.

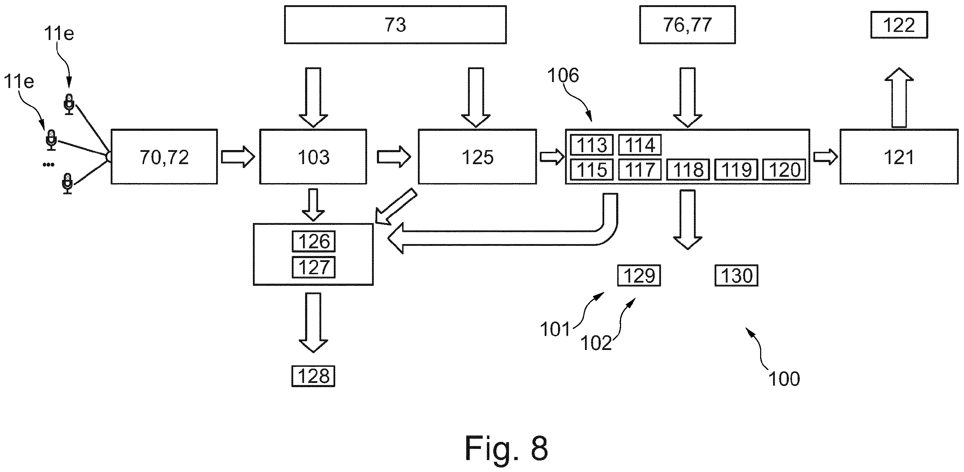

Figur 8 zeigt ein Flussdiagramm eines erfindungsgemäßen Verfahrens 100, bei dem Sensordaten 70, und zwar Tondaten 72, als Rohdaten von Mikrofonen 11e, zunächst vorverarbeitet werden 103. Nach der Vorverarbeitung 103 kann aus den Sensordaten 70 ein Spektrogramm ermittelt werden 125. Sowohl in die Vorverarbeitung 103 als auch in die Ermittlung 125 des Spektrogramms können Umwelteinflüsse und/oder Windturbinendaten 73 berücksichtigt werden. Auf Basis der Daten von der Vorverarbeitung 103 und des Spektrogramms kann eine bisherige Trajektorie 128 erkannter Vögel ermittelt 126 und für die Zukunft vorhergesagt werden 127.

Ferner wird auf Basis des Spektrogramms ein Tonabdruck ermittelt 113 und es findet ein Inferencing 106 statt, und zwar ein Vergleich 114 des Tonabdrucks mit zuvor abgespeicherten Tonabdrücken und somit eine Zuordnung zu zumindest eines abgespeicherten Tonabdrucks 115. Das Inferencing 106 wird mit Hilfe eines Modells 76, und zwar mit Hilfe eines trainierten neuronalen Netzwerkes 77, durchgeführt. Es kann eine Abwägung 118 zum Ermitteln der passendsten Vogelart und eine Zuordnung 119 der Vogelart 130 zu jedem erkannten Vogel erfolgen. Dies kann eine Klassifikation 117 anhand der mindestens einen zugeordneten Form und/oder des mindestens einem zugeordneten Bewegungsprofil und/oder des mindestens einem zugeordneten Tonabdruck umfassen. Ferner kann die Anzahl 129 der Vögel bestimmt werden 120.

Das Ergebnis ist die Anzahl 129 der Vögel und deren Vogelart 130. Auf diese Weise wird mindestens ein fliegender Vogel erkannt 101 und klassifiziert 102. Ferner können Abweichungen bestimmt werden 121, um die benutzten Modelle zu aktualisieren 122.

Figur 9 zeigt eine erfindungsgemäße Vorrichtung 10, nämlich dessen Auswerteeinheit 55, mittels derer Sensordaten 70, und zwar Lidardaten 71 und Tondaten 72 ausgewertet werden, um die Vogelart 130, die Anzahl 129 und die bisherige und/oder zukünftige Trajektorie 128 zu bestimmen. Dabei können auch noch zusätzliche Informationen 75 einfließen, beispielsweise die Vorhersage von einem Vogelschwarm. Die Ergebnisse werden in einer Fusionseinheit 56 zusammengefasst. Die Fusionseinheit 56 ist dazu ausgebildet, Steuersignale 132 zum Ausführen einer Maßnahme zum Vermeiden einer Kollision auszugeben. Die Steuersignale 132 werden insbesondere einer Pitchverstelleinheit 57 übermittelt, die den Pitch der Rotorblätter 51 derart einstellen kann, dass dieser in den Trudelbetrieb übergeht. Ferner kann ein Steuersignal 132 einer Emissionseinheit 58 übermittelt werden, die mittels Lichtsignalen und/oder Tonsignalen die erkannten Vögel umleitet.

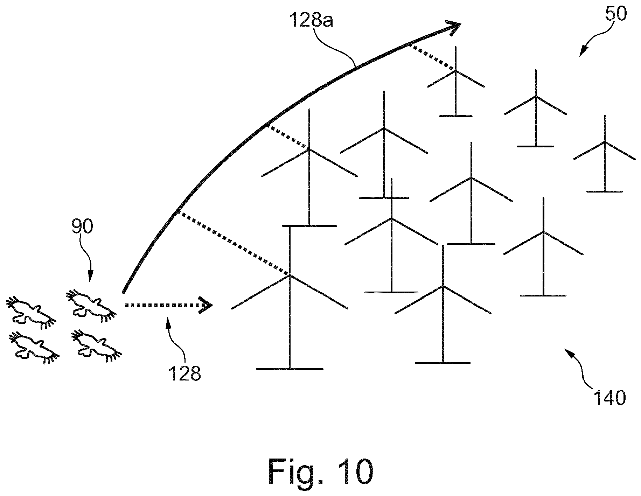

Figur 10 zeigt eine Umwegtrajektorie 128a im Rahmen einer Maßnahme zum Umleiten eines Vogels. In Figur 10 ist beispielsweise zu sehen, wie das erfindungsgemäße Verfahren 100 hinsichtlich eines Windparks 140 eingesetzt wird, der mehrere Windturbinen 50 umfasst. Dabei ist die vorhergesagte Trajektorie 128 von erkannten Vögeln 90 gezeigt, die normalerweise zu einer Kollision mit den Windturbinen 50 führen würde. Mittels der Emission von Licht- und/oder Tonsignalen wird erreicht, dass die Vögel 90 einer zuvor ermittelten Umwegtrajektorie 128a folgen. Dabei arbeiten die Windturbinen 50 des Windparks 140 zusammen. Beispielsweise ist in Figur 10 zu sehen, wie unterschiedliche Windturbinen 50 die Vögel 90 auf unterschiedlichen Abschnitten der Umwegtrajektorie 128a mittels Ton- und/oder Lichtsignalen beeinflussen und ebenfalls überwachen, ob die Vögel der Umwegtrajektorie 128a auf dem jeweiligen Abschnitt tatsächlich folgen.

### BEZUGSZEICHENLISTE

- 10: Vorrichtung
- 11: Sensor
- 11a: erster Sensor
- 11b: zweiter Sensor
- 11c: Erfassungsbereich
- 11d: Lidarsensor
- 11e: Mikrofon
- 11f: Mikrofon-Array

- 50: Windturbine
- 51: Rotorblatt
- 52: Turm
- 53: Nabe
- 54: Gondel
- 55: Auswerteeinheit
- 56: Fusionseinheit
- 57: Pitchverstelleinheit
- 58: Emissionseinheit

- 70: Sensordaten
- 71: Lidardaten
- 72: Tondaten
- 73: Umwelteinflüsse und/oder Windturbinendaten
- 74: zusätzliche Messdaten
- 75: zusätzliche Informationen
- 76: Modell
- 77: neuronales Netzwerk

- 90: Vogel
- 91: Geräusche

- 100: Verfahren
- 101: Erkennen von mindestens einem fliegenden Vogel
- 102: Klassifizieren von mindestens einem fliegenden Vogel
- 103: Vorverarbeitung der Sensordaten
- 104: Bereinigung der Sensordaten von nicht relevanten Einflüssen
- 105: Verarbeitung der Sensordaten
- 106: Inferencing
- 107: Ermitteln einer Form des mindestens einen fliegenden Vogels
- 108: Vergleich mit zuvor abgespeicherten Formen
- 109: Zuordnung zu mindestens einer abgespeicherten Form

- 110: Ermitteln eines Bewegungsprofils des mindestens einen fliegenden Vogels
- 111: Vergleich mit zuvor abgespeicherten Bewegungsprofilen
- 112: Zuordnung zu mindestens einem abgespeicherten Bewegungsprofil
- 113: Ermitteln eines Ton-Abdrucks des mindestens einen fliegenden Vogels
- 114: Vergleich mit zuvor abgespeicherten Ton-Abdrücken
- 115: Zuordnung zu mindestens einem abgespeicherten Ton-Abdruck
- 116: Zusammenführen der Ergebnisse
- 117: Klassifikation anhand der mindestens einen zugeordneten Form und/oder des mindestens einem zugeordneten Bewegungsprofil und/oder des mindestens einem zugeordneten Tonabdruck
- 118: Abwägung zum Ermitteln der passendsten Vogelart
- 119: Zuordnung einer Vogelart

- 120: Bestimmung der Anzahl der Vögel
- 121: Bestimmung von Abweichungen
- 122: Aktualisieren des Modells
- 123: Ausführung einer Maßnahme zum Vermeiden einer Kollision
- 124: Emittieren von Lichtsignalen und/oder Tonsignalen
- 125: Ermitteln eines Spektogramms
- 126: Ermitteln einer bisherigen Trajektorie
- 127: Vorhersage einer zukünftigen Trajektorie
- 128: Trajektorie
- 128a: Umwegtrajektorie
- 129: Anzahl

- 130: Vogelart
- 131: Ableiten kinematischer Informationen
- 132: Steuersignal

- 140: Windpark

## Patentansprüche

1. Verfahren (100) zur Vermeidung von Kollisionen zwischen mindestens einem fliegenden Vogel (90) und einer Windturbine (50),
**dadurch gekennzeichnet, dass**
das Verfahren (100) ein Erkennen (101) und ein Klassifizieren (102) des mindestens einen Vogels (90) mittels Sensordaten (70) mindestens eines an einer Windturbine (50) angeordneten Sensors (11) umfasst.

2. Verfahren (100) nach Anspruch 1,
wobei das Verfahren (100) eine Bestimmung (120) einer Anzahl (129) des mindestens einen Vogels (90) oder mehrerer Vögel und/oder eine Zuordnung (119) einer Vogelart (130) zu dem mindestens einen Vogel (90) umfasst.

3. Verfahren (100) nach einem der Ansprüche 1 oder 2,
wobei es sich bei dem mindestens einen Sensor (11) um einen Solid State Lidar-Sensor (11d) handelt.

4. Verfahren (100) nach einem der Ansprüche 1 oder 2,
wobei es sich bei dem mindestens einen Sensor (11) um ein Mikrofon (11e) handelt.

5. Verfahren (100) nach einem der vorangehenden Ansprüche,
wobei das Verfahren (100) ein Ermitteln (107) einer Form des mindestens einen fliegenden Vogels (90) umfasst,
wobei die ermittelte Form mit zuvor abgespeicherten Formen verglichen wird (108), und
wobei das Verfahren (100) eine Zuordnung (109) zu mindestens einer abgespeicherten Form umfasst.

6. Verfahren (100) nach einem der vorangehenden Ansprüche,
wobei das Verfahren (100) ein Ermitteln (110) eines Bewegungsprofils des mindestens einen fliegenden Vogels (90) umfasst,
wobei das ermittelte Bewegungsprofil mit zuvor abgespeicherten Bewegungsprofilen verglichen wird (111), und
wobei das Verfahren (100) eine Zuordnung (112) zu mindestens einem abgespeicherten Bewegungsprofil umfasst.

7. Verfahren (100) nach einem der Ansprüche 4 bis 6,
wobei das Verfahren (100) ein Ermitteln (113) eines Ton-Abdrucks umfasst,
wobei der ermittelte Ton-Abdruck mit zuvor abgespeicherten Ton-Abdrücken verglichen wird (114), und
wobei das Verfahren (100) eine Zuordnung (115) zu mindestens einem abgespeicherten Tonabdruck umfasst.

8. Verfahren (100) nach einem der Ansprüche 5 bis 7,
wobei das Klassifizieren (117) anhand der mindestens einen zugeordneten Form und/oder des mindestens einen zugeordneten Bewegungsprofils und/oder des mindestens einen zugeordneten Tonabdrucks erfolgt.

9. Verfahren (100) nach einem der vorangehenden Ansprüche,
wobei das Verfahren (100) ein Ermitteln (126) einer bisherigen Trajektorie (128) des fliegenden Vogels (90) auf Basis des Bewegungsprofils umfasst,
wobei das Verfahren (100) insbesondere eine Vorhersage (127) der zukünftigen Trajektorie (128) umfasst.

10. Verfahren (100) nach einem der Ansprüche 2 bis 9,
wobei das Verfahren (100) eine Ausführung (123) einer Maßnahme zum Vermeiden einer Kollision umfasst,
wobei eine Maßnahme in Abhängigkeit der ermittelten Vogelart (130) und/oder mit der Vogelart (130) verbundenen zuvor abgespeicherten Eigenschaften und/oder der ermittelten Anzahl (129) der Vögel (90) und/oder der ermittelten bisherigen Trajektorie (128) und/oder der vorhergesagten zukünftigen Trajektorie (128) gewählt wird.

11. Verfahren (100) nach Anspruch 10,
wobei eine Maßnahme ein Emittieren (124) von Lichtsignalen und/oder Tonsignalen umfasst, um den Vogel (90) umzuleiten.

12. Verfahren (100) nach Anspruch 11,
wobei das Emittieren (124) derart erfolgt, dass der Vogel (90) einer zuvor ermittelten Umwegtrajektorie (128a) folgt.

13. Vorrichtung (10) zur Vermeidung von Kollisionen zwischen mindestens einem fliegenden Vogel (90) und einer Windturbine (50),
**dadurch gekennzeichnet, dass**
die Vorrichtung (10) mindestens einen an einer Windturbine angeordneten Sensor (11) zur Gewinnung von Sensordaten (70) umfasst,
wobei die Vorrichtung (10) eine Auswerteeinheit (55) zum Erkennen (101) und Klassifizieren (102) des mindestens einen fliegenden Vogels (90) umfasst, wobei die Vorrichtung (10) insbesondere zur Durchführung eines Verfahrens (100) nach einem der Ansprüche 1 bis 12 ausgebildet ist.

14. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 12, gegebenenfalls im Zusammenspiel mit einer Vorrichtung (10) gemäß Anspruch 13, durchzuführen.

15. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 12, gegebenenfalls im Zusammenspiel mit einer Vorrichtung (10) gemäß Anspruch 13, durchzuführen.
